# EUROPÄISCHE PATENTANMELDUNG

(11) **EP 4 650 332 A1**
(43) Veröffentlichungstag der Anmeldung: **19.11.2025**
(21) Anmeldenummer: 25177192.9
(22) Anmeldetag: 19.05.2025
(51) Int. Cl.: C04B 18/02, C04B 20/10

(54) **VERFAHREN ZUR HERSTELLUNG VON ERSATZBAUSTOFFAGGLOMERATEN**

(30) Priorität: 17.05.2024 EP 24176670
(71) Anmelder: Quarzwerke GmbH, 50226 Frechen (DE)
(72) Erfinder: OBELS, Sebastian, 53909 Zülpich (DE); JANSEN, Julius Andreas, 48429 Rheine (DE)
(74) Vertreter: Dompatent

(57) **Zusammenfassung**

Verfahren zur Herstellung von Ersatzbaustoffagglomerate umfassend die Schritte
a) Bereitstellen von Gießereirestsanden mit einer d90ᵥₒₗ-Korngröße < 400 µm
b) optional Bereitstellen von Füllstoffen mit einer d90ᵥₒₗ-Korngröße < 250 µm
c) Vermischen mit einem mineralischen Bindemittel und optional Füllstoffen
d) Aufbauagglomeration, um Ersatzbaustoffagglomerate zu erhalten.

## Beschreibung

Die vorliegende Erfindung betrifft ein Verfahren zur Herstellung von Ersatzbaustoffagglomeraten, sowie die dadurch erhältlichen Ersatzbaustoffagglomerate.

Mineralische Abfälle bilden einen relevanten Anteil aller industriellen Abfälle. Diese müssen meist einer Deponierung zugeführt werden. Wünschenswert ist es, solche Produkte weiter zu verwenden und - wenn ihre Wiederaufarbeitung nicht möglich ist - sie sinnvoll zu verwerten, um dadurch Ressourcen zu sparen.

Eine Quelle von mineralischen Abfällen sind Gießereisande. Gießereisande werden zur Urformung von Metallformteilen verwendet. Sand wird mithilfe von Bindemitteln in eine Form gebracht und dient als verlorene Form in der Gießerei. Der Gießereisand ist dann mit Bindemitteln und Metallresten verunreinigt und kann teilweise wieder aufgearbeitet werden. Dabei entstehen Gießereirestsande, die nicht wiederverwertet werden können.

Aufgabe der vorliegenden Erfindung ist es, für diese Sande eine Verwertungsmöglichkeit zu finden.

Gelöst wird die Aufgabe durch ein Verfahren zur Herstellung von Ersatzbaustoffagglomerate umfassend die Schritte
a) Bereitstellen von Gießereirestsanden mit einer d90ᵥₒₗ-Korngröße < 400 µm
b) optional Bereitstellen von Füllstoffen mit einer d90ᵥₒₗ-Korngröße < 250 µm
c) Vermischen mit einem mineralischen Bindemittel und optional den Füllstoffen
d) Aufbauagglomeration, um Ersatzbaustoffagglomerate zu erhalten.

Erfindungsgemäß wird ein Ersatzbaustoffagglomerat hergestellt. Ersatzbaustoffagglomerat meint einen im weitesten Sinne kugelförmigen Körper, der anstelle von Gesteinskörnungen (Kies und Splitt) in verschiedenen Bereichen der Bauindustrie eingesetzt werden kann und nach DIN EN 12620 eine zertifizierte Gesteinskörnung bildet.

Erfindungsgemäß wird hierzu ein Sand bereitgestellt, der ein Gießereirestsand ist. Der entsprechende Sand hat eine d90ᵥₒₗ-Korngröße < 400 µm. d90ᵥₒₗ bedeutet, dass 90 Vol-% der Partikel eine Korngröße kleiner als der angegeben Wert aufweisen und 10 Vol-% eine größere Korngröße. Solche Korngrößen werden typischerweise mathematisch mittels Lasergranulometrie bestimmt. Bevorzugt hat der Sand eine Korngröße d90ᵥₒₗ < 150 µm. Der Sand sollte bevorzugt eine d90ᵥₒₗ-Korngröße oberhalb von 30 µm haben.

Gießereisande, auch bekannt als Gusssande oder Gießereialtsande, bestehen überwiegend aus reinem, hochwertigen Quarzsand einheitlicher Korngröße. Dieser Sand wird zur Bildung von Gussformen für eisenhaltige (Eisen & Stahl) und eisenfreie (Kupfer, Aluminium, Messing) Metallgüsse verwendet. Das in der Industrie am häufigsten verwendete Gießverfahren ist das Sandgusssystem. Als Bindemittel in Gießereisanden können verschiedene Systeme genutzt werden. Zum einen die sogenannten Grünsande, bestehend aus Quarzsand, Bentonit-Ton, Wasser und Kohle. Neben diesem Bindemitteltyp gibt es auch weitere Bindemittel, wie bspw. Kunstharze oder Wasserglas. Kunstharze, wie bspw. Phenolharze oder Furanharze, werden oft für die Herstellung von Kernen und Formen verwendet, die hohe Festigkeiten, sowie ein hohes Maß an Präzision erfordern. Systeme basierend auf Wasserglas (Natriumsilikat) gehören zu den anorganischen Bindemitteln. Es wird durch CO₂-Härtung und Wärmefreisetzung aktiviert/ausgehärtet. Es ist im Vergleich zu den Kunstharzsystemen umweltfreundlicher und wird daher immer häufiger von den Gießereien eingesetzt.

Gießereirestsande werden in der Literatur oft als Nebenprodukt der Gießereiindustrie beschrieben, das nach dem Gussprozess übrigbleibt. Dieser Sand enthält oft Rückstände von Bindemitteln und Metallpartikeln, die während des Gießprozesses verwendet werden. Die Zusammensetzung eines Gießereirestsandes (GRS) besteht hauptsächlich aus Quarzsand, der mit verschiedenen Bindemitteln wie bspw. die oben genannten Bentonit-Tone, Kunstharze oder Wasserglas vermischt/verunreinigt ist.

Das erfindungsgemäße Material kann direkt mit einem mineralischen Bindemittel oder zusammen mit einem Füllstoff und mineralischen Bindemitteln vermischt werden. Das Vermischen dient dazu, die Bestandteile möglichst homogen zu verteilen.

Diese Mischung wird dann verwendet, um durch eine Aufbauagglomeration Ersatzbaustoffagglomerate zu erhalten. Als Aufbauagglomeration eignen sich eine Pelettierung oder eine Granulierung besonders. Pelettierung und Granulierung sind dem Fachmann bekannt.

In einer Ausführungsform sind mineralische Füllstoffe enthalten. Geeignete mineralische Füllstoffe sind aus beispielsweise gebrochenem oder vermahlenem Quarz, Dolomit, Kaolin, Kalkstein, keramischen Bestandteilen aus einer Glasrecyclinganlage, Filterstäuben, glasfaserverstärkter Kunststoff (GFK) oder carbonfaserverstärkter Kunststoff aus industriellen Prozessen (CFK) Materialien aus industriellen Prozessen, Glasabfällen aus einem Recycling von Photovoltaik-Modulen, Glasscherben aus einer Behälter- oder Flachglasrecyclinganlage und Mischungen davon ausgewählt. Weiterhin gibt es bei der Quarzsandgewinnung Fraktionen, die nicht in dieser Form verwertbar sind. Diese bestehen beispielsweise aus quarzhaltigen Abraumerden, Quarzsanden aus der Neusandaufbereitung oder Quarzstäuben aus den Filteranlagen der Neusandaufbereitung. Die Füllstoffe haben eine d90ᵥₒₗ-Korngröße < 250 µm, bevorzugt < 150 µm.

Gebrochener oder vermahlener Quarz umfasst auch Gießereisandstäube. Gießereisandstäube werden nach einem Aufbrechen der Gießform als Nebenprodukte des Gießereirestsandes erhalten. Sie sind für eine Gießereisandaufbereitung zu fein. Typischerweise gibt es einen größeren Feinanteil, üblich sind 30 MA-% oder mehr < 10 µm. Sie enthalten teilweise Beimengungen von anderen Stoffen aus dem Gießprozess. Gießereisandstäube < 30 µm zählen daher zu den Füllstoffen, nicht zum Gießereisand.

Der eingesetzte Gießereirestsand bzw. die Mischung aus Gießereirestsand und Füllstoffen hat bevorzugt einen Feinanteil, bevorzugt mindestens 20 MA-% kleiner 30 µm, mehr bevorzugt 30 MA-% kleiner 30 µm.

GFK/CFK Materialien können zum Beispiel alte Windradflügel sein, die so zerkleinert wiederverwendet werden können. Hierbei handelt es sich um Glasfaserkarbonreststoffe, sowie Kohlefaserkarbonreststoffe. Die fasrigen Eigenschaften dieser Rohstoffe führen zu einer physikalischen Verstärkung des Granulats.

Glasabfälle aus dem Recycling von Photovoltaik-Modulen entstehen, wenn die Module das "end-of-life" erreicht haben.

In einigen Ausführungsformen weisen die Rohstoffe noch nicht die gewünschte Korngröße auf. In diesem Fall umfasst das Verfahren das Vermahlen der Gießereirestsande oder der Füllstoffe oder beider auf eine d90ᵥₒₗ-Korngröße < 400µm bzw. < 250 µm. Bevorzugt wird erfindungsgemäß Gießereirestsand eingesetzt, bei dem die d90ᵥₒₗ-Korngröße < 150 µm ist. Die Ausgangsstoffe können erfindungsgemäß- obwohl sie bereits eine erfindungsgemäße d90ᵥₒₗ-Korngröße aufweisen - weiter vermahlen werden.

Erfindungsgemäß ist es besonders bevorzugt, dass sowohl die Gießereirestsande als auch die Füllstoffe Mischungen darstellen, um eine möglichst einfache Verwertung zu erlauben.

Als mineralische Bindemittel eignen sich insbesondere Zement oder Geopolymere. Geopolymere sind anorganische, nicht-hydraulische Bindemittel und zählen zu den Zwei-Komponenten-Systemen.

Geopolymere entstehen durch die Kombination einer reaktiven alumosilikatischen Komponente, wie Metakaolin, Hüttensand oder Trass-Gestein, mit einer hochalkalischen, aktivierenden Lösung, wie Alkalihydroxid oder Wasserglas. Vermahlene Glasscherben bieten auch aktivierende Eigenschaften im Zwei-Komponenten-Geopolymersystem.

Geopolymere vermeiden die schädlichen CO₂ Emissionen der Zementherstellung.

In einigen Ausführungsformen kann das Bindemittel zusätzlich puzzolanische Flugaschen wie bspw. Papieraschen, Deinkingaschen oder Mischungen davon umfassen.

Papieraschen entstehen hauptsächlich durch die Verbrennung von Papierreststoffen in Heizkraftwerken oder produktionseigenen Verbrennungsanlagen. Diese Aschen enthalten typisch Calciumkarbonat, Kaolin und Titandioxid.

Deinkingaschen entstehen bei der Druckfarbenentfernung von Altpapier. Dabei entstehen zunächst Deinkingschlämme, die häufig verbrannt werden, da sie aufgrund des hohen Gehaltes organischer Bestandteile einen hohen Heizwert haben. Sie enthalten insbesondere Calciumcarbonat, Kaolin und Silikate.

Geeignete Mengenverhältnisse zwischen den Bestandteilen sind:
10 - 95 MA-% Sande
0 - 85 MA-% Füllstoffe
1 - 50 MA-% Bindemittel.

Erfindungsgemäß erfolgt die Aufbauagglomeration bevorzugt in Anwesenheit von Wasser.

In einer Ausführungsform der Erfindung erfolgt nach der Aufbauagglomeration noch ein Schritt, bei dem die Ersatzbaustoffagglomerate mit einer Mischung von Quarzsand und mineralischen Bindemittel umhüllt werden, um umhüllte Ersatzbaustoffagglomerate zu erhalten. Als Mischung von Quarzsand und Bindemittel eignen sich Mischungen im Gewichtsverhältnis von 20:80 bis 80:20. Der Quarzmehl hat bevorzugt eine d50ᵥₒₗ-Korngröße von 10 bis 100 µm, diese Größe wird alternativ auch Quarzmehl genannt.

Wenn eine Umhüllung eingesetzt wird, beträgt das Massenverhältnis zwischen Kern und Umhüllung bevorzugt 60-90:40-10 MA-%.

Die erhaltenen Ersatzbaustoffagglomerate können unterschiedliche Größen aufweisen. Dabei kann die Größe gezielt gesteuert werden oder Mischungen können z.B. durch Sieben in Fraktionen unterteilt werden. Bevorzugte Größen sind Größen im Bereich von >0 bis 45 mm, bevorzugte Kornklassen sind 1-2 mm, 1-8 mm, 2-3 mm, 2-4 mm, 2-8 mm, 3-4 mm, 4-5 mm, 4-8 mm, 5-8 mm, 8-11 mm, 8-12 mm, 8-16 mm, 11-16 mm, 16-32 mm oder 32- 45 mm.

Gegenstand der Erfindung sind auch die Ersatzbaustoffagglomerate bzw. die umhüllten Ersatzbaustoffagglomerate, die durch das erfindungsgemäße Verfahren erhältlich sind.

Die erfindungsgemäßen Ersatzbaustoffagglomerate können z.B., aber nicht ausschließlich in Beton, Estrich, Mörteln oder losgelöst in Tragschicht-Systemen als Ersatz für natürlichen Kies und Sand eingesetzt werden.

Die Erfindung wird durch die nachfolgenden Beispiele näher erläutert.

### Beispiel: Herstellung von Probenkörpern

Die Ausgangsstoffe Gießereirestsand, Zement sowie Wasser werden in einem Intensivmischer bei höchster Einstellung der Wirblerdrehzahl für 30 Sekunden homogenisiert. Das gemischte Material wird anschließend in einem Bunker vorgelegt und mittels einer Bandwaage auf den Pelletierteller (Modell: Haver & Boecker SC1000) rezeptgenau dosiert.

Die Pelletiertellereinstellungen wurden hinsichtlich Neigung, Drehzahl, Tellerrandhöhe und Durchsatz wie folgt gewählt.

**Tabelle 1: Einstellungen Pelletierteller SC1000**

| **Parameter** | **Einstellung** |
|---|---|
| Neigung | 60° |
| Drehzahl | 26 U/min |
| Tellerrandhöhe | 300 mm |
| Durchsatz | 180 kg/h |

In der nachfolgenden Tabelle sind die unterschiedlichen Rezepturen zusammengefasst. Für die Versuche V1 und V2 wurde ausschließlich Gießereisand und Zement verwendet. In den Versuchen 1V1 und 1V2 erfolgte die Substitution eines Teils des Gießereisandes durch Quarzsand. Bindemittel war auch hier Zement.

Die Versuchsreihen V1 und V2 wurden jeweils zusätzlich mit zwei verschiedenen Umhüllungen, nachfolgend Coating genannt, beschichtet.

**Tabelle 2: Rezepturen Versuchskörnungen**

| **Versuchsnummer** | **Rohstoffe für Granulat in Kg** | | | | **Coating in** % | | |
|---|---|---|---|---|---|---|---|
| | **Recycling -sand¹** | **Quarz²** | | **Anteil Zement** | **Quarz²** | **Zement** | **Metakaolin³** |
| V1 | 120 | | | 12 | | | |
| V2 | 120 | | | 12 | | | |
| V3 | 120 | | | 12 | 50 | 50 | |
| V4 | 120 | | | 12 | 50 | 40 | 10 |
| V5 | 70 | 50 | | 12 | 50 | 50 | |
| V6 | 70 | 50 | | 12 | 50 | 40 | 10 |

| | | | | | | | |
|---|---|---|---|---|---|---|---|
| ¹) Recyclingsand: Gießereirestsand: Es wurden folgende Sieblinien unterschiedlicher Chargen gewählt: d50ᵥₒₗ-Korngröße: 220 µm d90ᵥₒₗ-Korngröße: 377 µm. Bei V2V wurden die identische Sieblinien eingehalten, allerdings waren 5 MA-% an Gießereirestsandfilterstäuben als Füllstoff enthalten. ²) gemahlener Quarzsand: d50ᵥₒₗ-Korngröße: 48,3 µm d95ᵥₒₗ-Korngröße: 184,9 µm ³) Metakaolin: d50ᵥₒₗ-Korngröße: 19,50 µm d90ᵥₒₗ-Korngröße: 51,30 µm | | | | | | | |

**Tabelle 3: Ermittlung und Mengenverhältnis der Beschichtungen (Coatings)**

| | | | | | | | |
|---|---|---|---|---|---|---|---|
| | | | | | | | |

| **Coating I V3 + V5** | **50: 50 Zement/Mehl** | | | **Coating II V4 + V6** | **50 Mehl: 40 Zement:10 Metakaolin** | | |
|---|---|---|---|---|---|---|---|
| **Durchmesser Pellet** | **M gesamt** | **M pellet** | **M coating** | **Durchmesser Pellet** | **M gesamt** | **M pellet** | **M coating** |
| [mm] | [g] | [g] | [g] | [mm] | [g] | [g] | [g] |
| 14,44 | 3,04 | 2,67 | 0,37 | 10,11 | 1,19 | 0,84 | 0,35 |
| 13,01 | 2,49 | 1,96 | 0,53 | 11,11 | 1,42 | 0,99 | 0,43 |
| 14,31 | 3,19 | 2,54 | 0,65 | 10,78 | 1,43 | 0,89 | 0,54 |
| 14,64 | 3,13 | 2,22 | 0,91 | 10,48 | 1,24 | 0,91 | 0,33 |
| 11,47 | 1,63 | 1,2 | 0,43 | 11,82 | 1,8 | 0,9 | 0,9 |
| 16,44 | 5,32 | 4,02 | 1,3 | 10,93 | 1,46 | 1,15 | 0,31 |
| 18,21 | 6,06 | 4,84 | 1,22 | 10,27 | 1,24 | 0,92 | 0,32 |
| 14,06 | 3 | 2,12 | 0,88 | 12,1 | 1,83 | 1,29 | 0,54 |
| 18,98 | 6,72 | 4,39 | 2,33 | 11,48 | 1,55 | 0,9 | 0,65 |
| 12,44 | 2,01 | 1,39 | 0,62 | 12,43 | 1,78 | 0,97 | 0,81 |
| 11,99 | 2,03 | 1,59 | 0,44 | 10,04 | 1,03 | 0,76 | 0,27 |
| 11,02 | 1,69 | 1,02 | 0,67 | 12,58 | 2,32 | 1,23 | 1,09 |
| 12,56 | 2,01 | 1,53 | 0,48 | 9,57 | 1,09 | 0,82 | 0,27 |
| 16,61 | 5,02 | 3,89 | 1,13 | 11,71 | 1,75 | 1,08 | 0,67 |
| 13,8 | 2,883 | 1,76 | 1,123 | 9,56 | 0,82 | 0,64 | 0,18 |
| 13,53 | 2,83 | 1,72 | 1,11 | 10,57 | 1,16 | 0,81 | 0,35 |
| 15,4 | 3,99 | 2,89 | 1,1 | 8,9 | 0,8 | 0,61 | 0,19 |
| 16,38 | 5,12 | 4,11 | 1,01 | 9,93 | 0,93 | 0,79 | 0,14 |
| 16,93 | 5,69 | 3,69 | 2 | 11,34 | 1,59 | 1,17 | 0,42 |
| 14,32 | 3,32 | 2,61 | 0,71 | 11,61 | 1,61 | 1,13 | 0,48 |
| Mittelwert | 3,55865 | 2,608 | 0,95065 | 10,866 | 1,402 | 0,94 | 0,462 |
| | | 73% | 27% | | | 67% | 33% |

### Kornformparameter

### Korngrößenverteilung

Jeder Versuch ergibt Ersatzbaustoffagglomerate enthält unterschiedlicher Korngrößen. Hiervon können durch Siebungen typische Sand bzw. Kies-Kornklassen erhalten werden, z.B. 2-4 mm, 4-8 mm, 8-12 mm oder 12-16 mm.

Die Korngrößenverteilung wurde aus Sieblinien bestimmt. Für weitere Untersuchungen gemäß DIN-EN-Norm wurden dann entsprechende Kornklassen eingesetzt.

Der Gehalt an Feinanteilen in den Ersatzbaustoffagglomeraten ist gering, der Feinanteil unter 0,063 µm beträgt 0 MA-%. Dies ist durch die entsprechende Soll-Korn-Produktion gewährleistet.

### Kornformkennzahl

Die Bestimmung der Kornformkennzahl erfolgte in Anlehnung an DIN EN 933-4 mittels eines Partikelgrößenanalysators Typ CamSizer.

**Tabelle 4: Kornformkennzahl**

| **Probenbezeichnung** | **Kornformkennzahl** |
|---|---|
| | **SI** |
| V1 | 1 |
| V2 | 1 |
| V3 | 1 |
| V4 | 1 |
| V5 | 1 |
| V6 | 1 |

Die Kornformkennzahl ist sehr gering. Alle Proben können danach in die Kategorie *SI*₁₅ nach DIN EN 12620 eingeordnet werden.

### Physikalische Anforderungen

### Rohdichte und Wasseraufnahme

Die Ermittlung von Kornrohdichte und Wasseraufnahme der Granulate erfolgte gemäß DIN EN 1097-6.

**Tabelle 5: Kornrohdichte und Wasseraufnahme**

| **Probenbezeichnung** | **Kornrohdichte** | **Wasseraufnahme** |
|---|---|---|
| | **Pssd [g/cm³]** | **WA24 [MA-%]** |
| V1 | 2,03 | 14,9 |
| V2 | 1,99 | 16,6 |
| V3 | 2,226 | 9,1 |
| V4 | 2,22 | 10,6 |
| V5 | 2,21 | 10,3 |
| V6 | 2,17 | 12,1 |

Die Kornrohdichte ist die Masse eines Korns bezogen auf sein durch die Kornoberfläche begrenztes Volumen einschließlich Kornporen in g/cm³.

Die Kornrohdichte und die Wasseraufnahme waren in einem geeigneten Bereich.

### Reindichte

Die Bestimmung der Reindichte erfolgte in Anlehnung an ISO 21687 mittels eines Heliumpyknometers Micromeritics AccuPyc 1330 und Aufbereitung < 63 µm.

**Tabelle 6: Reindichte**

| **Probenbezeichnung** | **Reindichte** |
|---|---|
| | **[g/cm³]** |
| V1 | 2,63 |
| V2 | 2,65 |
| V3 | 2,61 |
| V4 | 2,63 |
| V5 | 2,63 |
| V6 | 2,63 |

Unter Reindichte wird die Dichte eines Körpers ohne Berücksichtigung des Volumens von im Körper vorhandenen Hohlräumen bzw. Poren verstanden. Sie ergibt sich also aus dem Quotienten der Masse des Stoffs und seines porenfreien Volumens und wird meist mit ρ abgekürzt.

### Schüttdichte und Hohlraumgehalt

Schüttdichte und Hohlraumgehalt wurden gemäß DIN EN 1097-3 bestimmt.

**Tabelle 7: Schüttdichte und Hohlraumgehalt**

| **Probenbezeichnung** | **Schüttdichte** | **Hohlraumgehalt** |
|---|---|---|
| | **[g/cm³]** | **[%]** |
| V1 | 1,075 | 40,2 |
| V2 | 1,053 | 36,9 |
| V3 | 1,2 | 41,99 |
| V4 | 1,18 | 41,24 |
| V5 | 1,2 | 40,43 |
| V6 | 1,16 | 40,06 |

Die Ergebnisse der Schüttdichte spiegeln den Porenraum des erzeugten Granulats dar. Hierdurch verringert sich die Schüttdichte im Vergleich zum Primärrohstoff (z.B. Naturkies).

### Chemische Anforderung

### Gehalt an säurelöslichem Sulfat und Gesamtschwefel

Die Gehalte an säurelöslichem Sulfat und Gesamtschwefel wurden nach DIN EN 1744-1 bestimmt .

**Tabelle 8: Gehalte an säurelöslichem Sulfat und Gesamtschwefel**

| **Probenbezeichnung** | **Säurelösliches Sulfat** | **Gesamtschwefel** |
|---|---|---|
| | **[MA-%]** | **[MA-%]** |
| V1 | 0,55 | 0,21 |
| V2 | 1,12 | 0,45 |
| V3 | 1,2 | 0,4 |
| V4 | 0,65 | 0,26 |
| V5 | 0,84 | 0,3 |
| V6 | 0,82 | 0,28 |

Entsprechend der Gehalte an säurelöslichem Sulfat sind nach DIN EN 12620 die Probe V3 in die Kategorie AS1,2; die Proben V5 und V6 in die Kategorie AS1,0 und alle anderen Proben in die Kategorie AS0,8 einzuordnen.

Nach den Gesamtschwefelgehalten entsprechen alle Proben der Kategorie S1 nach DIN EN 12620.

### Gehalt an wasserlöslichem Sulfat und Chlorid

Die Gehalte an wasserlöslichem Sulfat und Chlorid wurden ebenfalls nach DIN EN 1744-1 bestimmt.

**Tabelle 9: Gehalte an wasserlöslichem Sulfat und Chlorid**

| **Probenbezeichnung** | **wasserlösliches Chlorid** | **wasserlösliches Sulfat** |
|---|---|---|
| | **[MA-%]** | **[MA-%]** |
| V1 | 0,01 | 0,05 |
| V2 | 0,01 | 0,11 |
| V3 | < 0,001 | 0,001 |
| V4 | < 0,001 | 0,002 |
| V5 | < 0,001 | 0,001 |
| V6 | < 0,001 | 0,001 |

Die Gehalte an wasserlöslichem Chlorid sind für alle Proben ≤0,01 % und sind damit gemäß DIN EN 12620 unbedenklich.

Nach den Gehalten an wasserlöslichem Sulfat sind alle Proben gemäß DIN EN 12620 in die Kategorie SS0,2 einzustufen.

### Gehalte an geregelten gefährlichen Substanzen

Die Bewertung der Inhaltsstoffe rezyklierter Gesteinskörnungen (geregelte gefährliche Substanzen) erfolgte nach DIN 4226-101.

**Tabelle 10: Geregelte gefährliche Substanzen**

| **Eigenschaft/Parameter** | | **Höchstwerte DIN 4226-101** | V1 | V2 | **V3** | **V4** | **V5** | **V6** |
|---|---|---|---|---|---|---|---|---|
| **Eluat** | | | | | | | | |
| pH-Wert | µS/cm | 12,5 | 11,2 | 11,0 | 12 | 12 | 12,4 | 12,2 |
| Elektrische Leitfähigkeit | mg/l | 3000 | 1538 | 1158 | 3310 | 2774 | 3810 | 4230 |
| Chlorid | mg/l | 150 | 14,2 | 11,5 | 7,6 | 7,4 | <5 | 6,2 |
| Sulfat | µg/l | 600 | 44,7 | 108 | 10,4 | 21,7 | 10,1 | 7,6 |
| Arsen | µg/l | 50 | < 1 | 1 | <1 | <1 | <1 | <1 |
| Blei | µg/l | 100 | < 5 | < 5 | <5 | <5 | <5 | <5 |
| Cadmium | µg/l | 5 | < 0,5 | < 0,5 | <0,5 | <0,5 | <0,5 | <0,5 |
| Chrom gesamt | µg/l | 100 | 60 | 102 | 10 | 28 | 17 | 15 |
| Kupfer | µg/l | 200 | 9 | < 5 | 5 | <5 | <5 | 8 |
| Nickel | µg/l | 100 | < 5 | < 5 | <5 | <5 | <5 | <5 |
| Quecksilber | µg/l | 2 | < 0,2 | < 0,2 | <0,2 | <0,2 | <0,2 | <0,2 |
| Zink | µg/l | 400 | 27 | 18 | <5 | 42 | <5 | 7 |
| Phenolindex | | 100 | 75 | 66 | 50 | 60 | <10 | 45 |
| **Feststoff** | mg/kg | | | | | | | |
| Mineralölkohlenwasserst offe (C10 - C40) | mg/kg | 1000 | <50 | 190 | 60 | 150 | <50 | <50 |
| PAK nach EPA | mg/kg | 25 | 0,54 | 2,8 | <0,8 | <0,8 | <0,8 | <0,8 |
| EOX | mg/kg | 10 | 0,68 | 0,69 | <0,5 | <0,5 | <0,5 | <0,5 |
| PCB | | 1 | < 0,012 | <0,012 | <0,012 | <0,012 | <0,012 | <0,012 |

Die Gehalte an geregelte gefährliche Substanzen liegen innerhalb der Grenzwerte der DIN 4226-101. V2 umfasste die zum Gießereirestsand dazugehörigen Filterstäube und war daher etwas höher belastet.

Teilweise geringfügige Überschreitungen des Grenzwertes der elektrischen Leitfähigkeit werden als nicht relevant angesehen.

### Dauerhaftigkeit

### Alkali-Kieselsäure-Reaktivität

Untersuchung Alkali-Kieselsäure-Reaktivität, Mörtelschnelltest nach DAfStb-Richtlinie.

Zur Prüfung einer eventuellen Alkaliempfindlichkeit der zu untersuchenden Gesteinskörnung wurde diese einem Mörtelschnelltest nach der DAfStb-Richtlinie "Vorbeugende Maßnahmen gegen schädigende Alkalireaktion im Beton (Alkali-Richtlinie)" unterzogen.

**Tabelle 11: AKR-Test**

| **Probe** | **Dehnung nach x Tagen [‰]** | | | | |
|---|---|---|---|---|---|
| | 0 | 1 | 5 | 9 | 14 |
| V1 | 0,000 | -0,017 | 0,019 | 0,023 | 0,094 |
| V2 | 0,000 | -0,038 | 0,037 | 0,110 | 0,156 |
| V3 | 0,0000 | 0,1370 | 0,4160 | 0,5420 | 0,6600 |
| V4 | 0,0000 | 0,2840 | 0,4450 | 0,5730 | 0,7370 |
| V5 | 0,0000 | 0,0380 | 0,0780 | 0,1390 | 0,2190 |
| V6 | 0,0000 | 0,0170 | 0,0840 | 0,1470 | 0,2250 |

Alle untersuchten Granulate können danach in die Alkaliempfindlichkeitsklasse El-S eingestuft werden, welche keine vorbeugenden Maßnahmen gegen schädigende Alkalireaktion im Beton erfordert.

### Widerstand gegen Frost-Tau-Wechsel

Die Bestimmung des gegen Frost-Tau- Widerstands erfolgte nach DIN EN 1367-1.

**Tabelle 12: Widerstand gegen Frost-Tau-Wechsel**

| **Probenbezeichnung** | **Abwitterung FTW** |
|---|---|
| | **[MA-%]** |
| V1 | 2,3 |
| V2 | 10,4 |
| V3 | 6,1 |
| V4 | 9,5 |
| V5 | 10,2 |
| V6 | 8,4 |

Bezüglich des Frostwiderstands erfüllt die Probe 1V1 die Anforderungen der Kategorie F2 gemäß DIN EN 12620.

### Beständigkeit gegen Frost-Tau-Wechsel in der Gegenwart von Salz

Die Bestimmung der Beständigkeit gegen Frost-Tau-Wechsel in der Gegenwart von Salz erfolgte nach DIN EN 1367-2.

**Tabelle 13: Frost-Tausalz-Widerstand**

| **Probenbezeichnung** | **Abwitterung FTW + Salz** |
|---|---|
| | **[MA-%]** |
| V1 | 51,9 |
| V2 | 80,6 |
| V3 | 62,5 |
| V4 | 95 |
| V5 | 49,6 |
| V6 | 62,5 |

Die Probe V5 entspricht der schlechtesten Kategorie FEC50. Die anderen Proben erfüllen keine der Anforderungen.

Die erzeugten Granulate V3, V4 und V6 können nicht für einige Anwendungen, die der EN oder DIN unterliegen angewendet werden.

## Patentansprüche

1. Verfahren zur Herstellung von Ersatzbaustoffagglomerate umfassend die Schritte
a) Bereitstellen von Gießereirestsanden mit einer d90ᵥₒₗ-Korngröße < 400 µm
b) optional Bereitstellen von Füllstoffen mit einer d90ᵥₒₗ-Korngröße < 250 µm
c) Vermischen mit einem mineralischen Bindemittel und optional Füllstoffen
d) Aufbauagglomeration, um Ersatzbaustoffagglomerate zu erhalten.

2. Verfahren nach Anspruch 1, umfassend weiterhin den Schritt:
e) Umhüllen der Ersatzbaustoffagglomerate mit einer Mischung aus Quarzsand und mineralischem Bindemittel, um umhüllte Ersatzbaustoffagglomerate zu erhalten.

3. Verfahren nach Anspruch 1 oder 2, wobei die Aufbauagglomeration eine Pelettierung oder eine Granulierung ist.

4. Verfahren nach einem der vorhergehenden Ansprüche, wobei Füllstoffe enthalten sind, insbesondere, wobei die Füllstoffe ausgewählt werden aus gebrochenem oder gemahlenem Quarz, Dolomit, Kaolin, Kalkstein, keramischen Bestandteile aus einer Glasrecyclinganlage, Filterstäuben, glasfaserverstärkter Kunststoff oder carbonfaserverstärkter Kunststoff aus industriellen Prozessen, Glasabfällen aus einem Recycling von Photovoltaik-Modulen, Glasscherben aus einer Behälter- oder Flachglasrecyclinganlage und Mischungen davon.

5. Verfahren nach einem der vorhergehenden Ansprüche, wobei der Gießereirestsand oder die Füllstoffe auf eine d90ᵥₒₗ-Korngröße < 250 µm, bevorzugt d90ᵥₒₗ-Korngröße < 150 µm vermahlen werden.

6. Verfahren nach einem der vorhergehenden Ansprüche, wobei verschiedene mineralische Füllstoffe miteinander vermischt und homogenisiert werden.

7. Verfahren nach einem der 1 bis 6, wobei das mineralische Bindemittel in Schritt c) oder e) ausgewählt wird aus Zement, Geopolymeren oder Mischungen davon oder Verfahren nach einem der Ansprüche 2 bis 6 wobei das mineralische Bindemittel in Schritt e) ausgewählt wird aus Zement, Geopolymeren oder Mischungen davon.

8. Verfahren nach Anspruch 7, wobei die Geopolymere Zwei-Komponenten-Geopolymersysteme sind, wobei
- eine Komponente ausgewählt ist aus der Gruppe bestehend aus Metakaolin, gebranntem Kalk, Hüttensanden, Trass-Gestein und Mischungen davon und
- eine Komponente ausgewählt ist aus der Gruppe bestehend aus Alkalihydroxid, Wasserglas, vermahlenen Glasscherben oder Mischungen davon.

9. Verfahren nach Anspruch 7 oder 8, wobei das Bindemittel zusätzlich puzzolanische Flugaschen, insbesondere Papieraschen, Deinkingaschen oder Mischungen davon umfasst.

10. Verfahren nach einem der vorhergehenden Ansprüche, wobei folgende Mengen eingesetzt werden:
10 - 95 MA-% Gießereirestsanden
0 - 85 MA-% Füllstoffe
1 - 50 MA-% Bindemittel.

11. Verfahren nach einem der Ansprüche 2 bis 10, wobei die Mischung von Quarzsand und Bindemittel den Quarzsand und die Bindemittel im Gewichtsverhältnis 20:80 zu 80:20 enthalten, insbesondere, wobei das Umhüllen erfolgt, während die Ersatzbaustoffagglomerate eine Restfeuchte von 0 % bis 15 % aufweisen.

12. Verfahren nach einem der vorhergehenden Ansprüche, wobei die Granulate eine Größe im Bereich von 1 mm bis 45 mm aufweisen, insbesondere 1-2 mm, 1-8 mm, 2-3 mm, 2-4 mm, 2-8 mm, 3-4 mm, 4-5 mm, 4-8 mm, 5-8 mm, 8-11 mm, 8-12 mm, 8-16 mm, 11-16 mm, 16-32 mm oder 32- 45 mm.

13. Verfahren nach einem der Ansprüche 2 bis 12, wobei das Verfahren den weiteren Schritt
f) Trocknung der umhüllten Ersatzbaustoffagglomerate umfasst.

14. Verfahren nach einem der vorhergehenden Ansprüche, wobei das Verfahren ein Sieben nach Korngrößen umfasst.

15. Ersatzbaustoffagglomerate, erhältlich durch das Verfahren nach einem der Ansprüche 1 bis 14.
